# EUROPEAN PATENT APPLICATION

(11) **EP 3 734 008 A1**
(43) Date of publication of application: **04.11.2020**
(21) Application number: 18893470.7
(22) Date of filing: 29.11.2018
(51) Int. Cl.: E05F 15/603

(54) **VEHICLE DOOR AND DRIVER THEREOF**

(30) Priority: 26.12.2017 CN 201711428596
(71) Applicant: Guangdong Zhaoqing L & V Co. Ltd, Zhaoqing, Guangdong 526238 (CN)
(72) Inventor: GONG, Hongyu, Zhaoqing, Guangdong 526238 (CN); JIANG, Yuan, Zhaoqing, Guangdong 526238 (CN); YANG, Qingchun, Zhaoqing, Guangdong 526238 (CN); QIU, Xianghuai, Zhaoqing, Guangdong 526238 (CN)
(74) Representative: Banzer, Hans-Jörg
(86) International application number: PCT/CN2018/118175
(87) International publication number: WO 2019/128610

(57) **Abstract**

A driver device for opening and closing a vehicle door, comprising an electric motor and a planetary gear gearbox, wherein the electric motor comprises an electric motor output shaft, and the planetary gear gearbox comprises a gearbox input shaft coaxially connected to the electric motor output shaft, and a gearbox output shaft coaxially connected to an end of a door shaft of the vehicle door to provide the door shaft with a torque required to open and close the vehicle door. Compared with vehicle door opening and closing functions in the prior art, the driver device can be installed by utilizing the space at the door shaft of the vehicle door, without affecting the integrity of the door body of the vehicle door. Furthermore, a vehicle door comprising the aforesaid driver device is further provided.

## Description

The present application claims priority to Chinese Patent Application No. 201711428596.5 filed on December 26, 2017, which is incorporated herein by reference in its entirety as a part of the present application.

### TECHNICAL FIELD

The present invention relates to the technical field of vehicles and particularly to a vehicle door and a driver device for opening and closing the vehicle door.

### BACKGROUND ART

Vehicle doors with an automatic opening and closing function have gradually become standard equipment for many passenger vehicles, especially high-end passenger vehicles. For an ordinary vehicle door, it usually requires passengers to close it with a large pulling force. As a result, the vehicle door collides with a vehicle body violently such that the vehicle door may be damaged. If the pulling force is too small, however, the vehicle door may not be successfully locked and thus the passengers may be thrown out of the vehicle when the vehicle is running at a high speed.

To achieve automatic opening and closing of a vehicle door, one of the technical solutions in the prior art is to install a pull rod or pull rope with one end connected on top or bottom of the vehicle door. The other end of the pull rod or pull rope is connected to an electric motor, through which a suitable pulling force is applied to the pull rod or pull rope to open and close the vehicle door. In another technical solution in the prior art, an electric motor is installed inside the panel of the vehicle door, the electric motor is connected to the door shaft through a rack, and rotation of the electric motor is transmitted to the door shaft through the rack to open and close the vehicle door. However, neither the aforesaid solutions nor other automatic door opening and closing functions in the prior art are satisfactory. For example, there may not be enough space in the vehicle door to accommodate transmission mechanisms such as the pull rod, the pull rope or the rack. In other cases, the transmission mechanisms will destroy the integrity and simplicity of the vehicle door.

### SUMMARY OF THE INVENTION

An object of the present invention is to provide a driver device for opening and closing a vehicle door, comprising an electric motor and a planetary gear gearbox, wherein the electric motor comprises an electric motor output shaft, and the planetary gear gearbox comprises a gearbox input shaft coaxially connected to the electric motor output shaft, and a gearbox output shaft coaxially connected to an end of a door shaft of the vehicle door to provide the door shaft with a torque required to open and close the vehicle door.

Compared with vehicle door opening and closing functions in the prior art, the driver device of the present invention can be installed by utilizing the space at the door shaft, without affecting the integrity of the door body of the vehicle door.

Advantageously, the gearbox input shaft is provided as a first sun gear.

Advantageously, the planetary gear gearbox further comprises a non-rotatably mounted gearbox housing, whose inner surface is provided with a toothing.

Advantageously, the planetary gear gearbox further comprises a first planetary carrier, on which a first planetary gear meshing with the toothing is arranged, and a rotary shaft of the first planetary carrier is formed as the gearbox output shaft.

Advantageously, the planetary gear gearbox further comprises a second planetary carrier, on which a second planetary gear meshing with the toothing is arranged, and a rotary shaft of the second planetary carrier serves as a second sun gear meshing with the first planetary gear.

Advantageously, the planetary gear gearbox further comprises a third planetary carrier, on which a third planetary gear is arranged, the third planetary gear meshes with the toothing and the gearbox input shaft, and a rotary shaft of the third planetary carrier serves d as a third sun gear meshing with the second planetary gear.

Advantageously, the gearbox input shaft, the third sun gear, the second sun gear and the gearbox output shaft are coaxially arranged.

Advantageously, the planetary gear gearbox further comprises a flange fixedly connected with the electric motor in an axial direction and fixedly connected with the gearbox housing in a radial direction.

Advantageously, the gearbox output shaft comprises a flat free end that extends into a recess provided with a matching configuration in an end of the door shaft of the vehicle door.

In another aspect, the present invention further provides a vehicle door, comprising a door body and a door shaft for pivotally mounting the door body to a vehicle body. A driver device is mounted on the door shaft. The driver device comprises an electric motor and a planetary gear gearbox. The electric motor comprises an electric motor output shaft, and the planetary gear gearbox comprises a gearbox input shaft coaxially connected to the electric motor output shaft, and a gearbox output shaft coaxially connected to an end of the door shaft to provide the door shaft with a torque required to open and close the vehicle door.

### BRIEF DESCRIPTION OF THE DRAWINGS

Other details and advantages of the present invention will become apparent in the following detailed description with reference to the drawings, in which:
FIG. 1 is a schematic diagram of a vehicle door 10 according to the present invention, wherein a driver device 20 according to the present invention is coaxially mounted to a door shaft 30 of the vehicle door 10 to provide the door shaft 30 with a pivoting torque to open and close the vehicle door 10;
FIG. 2 is a schematic perspective view of the driver device 20 according to the present invention, comprising an electric motor 40 and a planetary gear gearbox 50 which are axially connected to each other;
FIG. 3 is an exploded view of the driver device 20 in FIG. 2; and
FIG. 4 is a cross-sectional view of the planetary gear gearbox 50 of FIG. 3.

The contents shown in the above drawings are merely examples and illustrations, and the drawings are not drawn strictly to scale, nor are all parts or details related to the specific usage scenario completely drawn. After understanding the principles and concepts of the present invention, those skilled in the art will be able to conceive of related technical contents known in the art that need to be included in order to implement the present invention in a specific usage scenario.

### DETAILED DESCRIPTION OF THE EMBODIMENTS

The terms "first", "second", and the like that may be used in the following description are not intended to limit any sequence, and are only for the purpose of distinguishing individual components, pieces, structures, elements, etc., and these individual components, pieces, structures, and elements may be the same, similar, or different. Furthermore, unless otherwise specified, the indication of orientations that may be used in the following description, such as "upper", "lower", "inner", "outer", "left", "right", "radial", and "axial", are not intended to limit the technical solution of the invention, but are only for convenience of description.

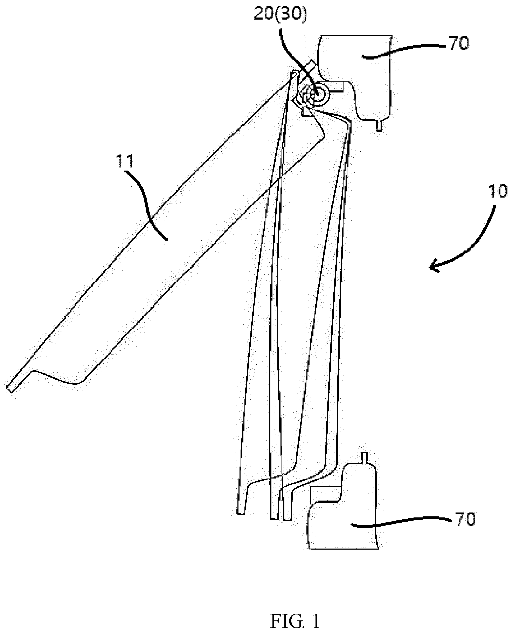

FIG. 1 is a schematic diagram of a specific vehicle door 10 according to the present invention, comprising a door body 11 and a door shaft 30 for pivotally mounting the door body 11 to a vehicle body 70. A driver device 20 is coaxially mounted to the door shaft 30 to provide the door shaft 30 with a pivoting torque to open and close the vehicle door 10. FIG.1 shows a plurality of pivoting positions of the vehicle door 10 when it is driven by the driver device 20, wherein the vehicle door 10 is closed and locked when the vehicle door 10 is pivoted to a position in which it is aligned with the vehicle body 70. In tFIG. 1, the driver device 20 is mounted on an upper end of the door shaft 30 and is coaxially aligned with the door shaft 30. Alternatively the driver device can also be mounted on a lower end of the door shaft 30.

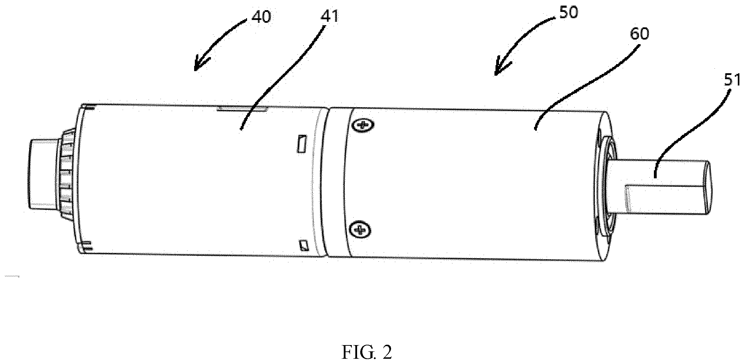

FIG. 2 is a perspective view of the driver device 20, wherein the driver device 20 comprises an electric motor 40 and a planetary gear gearbox 50. The electric motor 40 is axially aligned and connected with the planetary gear gearbox 50, so that the torque from the electric motor 40, after being increased by the gearbox 50, can be output by a gearbox output shaft 51, and provided to the door shaft 30 to open and close the vehicle door 10.

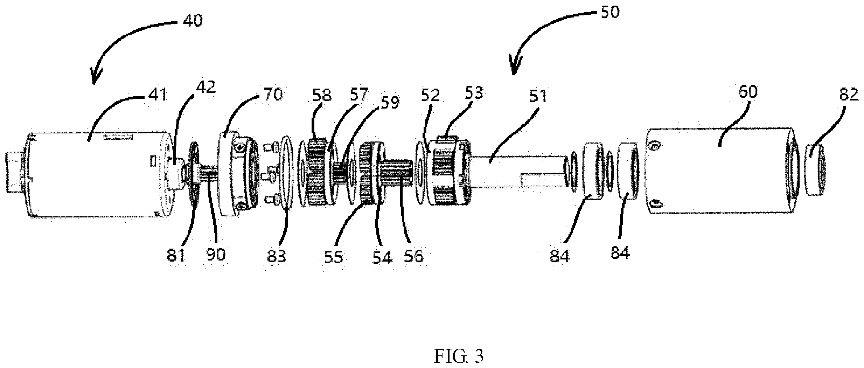

As shown in FIG. 3, the electric motor 40 has a cylindrical electric motor housing 41. A stator winding and a rotor (not shown in the figure) are arranged in an inner chamber of the electric motor housing 41. The stator winding generates a rotating magnetic field after being energized, acting on the rotor to form a magnetoelectric dynamic rotating torque. An electric motor output shaft 42 protrudes from an end of the electric motor housing 41. The electric motor 40 may be any suitable similar motor in the prior art, preferably a DC motor, although an AC motor also meets the principles and requirements of the present invention.

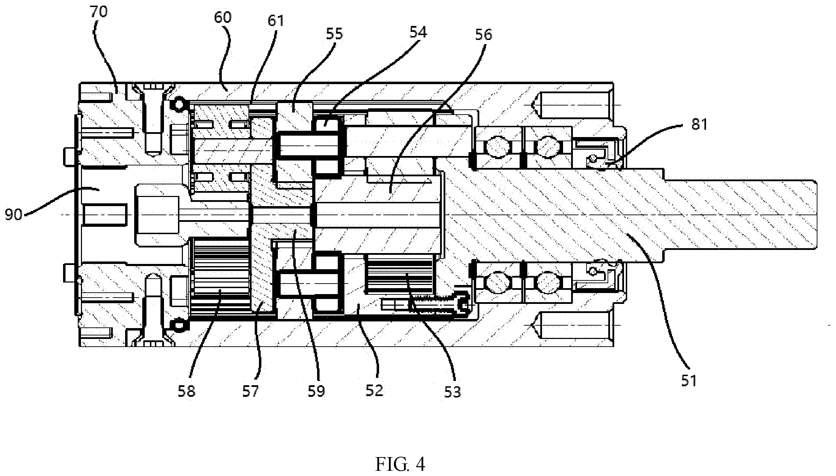

The specific structure of the driver device 20 will be described in detail below with reference to FIG. 3 and further in combination with FIG. 4, wherein FIG. 4 is a cross-sectional view of the planetary gear gearbox 50 of the driver device 20.

The gearbox 50 comprises a flange 70 which can be axially fixed to an end of the electric motor 40, for example with screws passing through the flange 70 and screwed thereto. The flange 70 is fixedly mounted to a gearbox housing 60 in a radial direction, for example with screws. The gearbox housing 60 has a cylindrical shape having an outer diameter substantially the same with that of the electric motor housing 41, and has an inner surface forming a toothing 61. Three planetary gear sets are arranged in the gearbox housing 60, each comprising three planetary gears, a planetary carrier for bearing the planetary gears, and a rotary shaft fixed to the planetary carrier and rotating therewith.

Specifically, a first planetary gear set is arranged in the gearbox housing 60, and comprises a first planetary carrier 52 on which three first planetary gears 53 meshing with the toothing 61 are arranged, and a rotary shaft of the first planetary carrier 52 forms the gearbox output shaft 51. The gearbox output shaft 51 comprises a flat free end which extends into a recess provided with the same configuration in an end of the door shaft, so that the gearbox output shaft 51 is connected to the door shaft 30 of the vehicle door 10 and provides the door shaft 30 with a pivoting torque to open and close the vehicle door 10. The gearbox output shaft 51 may also be coaxially connected to the door shaft 30 by other ways, e.g. by threaded connection.

A second planetary gear set is also arranged in the gearbox housing 60, and comprises a second planetary carrier 54 on which three second planetary gears 55 meshing with the toothing 61 are arranged, and a rotary shaft of the second planetary carrier 54 serves as a second sun gear 56 meshing with the three first planetary gear 53.

A third planetary gear set is also arranged in the gearbox housing 60, and comprises a third planetary carrier 57 on which three third planetary gears 58 meshing with the toothing 61 are arranged, and a rotary shaft of the third planetary carrier 57 serves as a third sun gear 59 meshing with the second planetary gear 55.

The planetary gear gearbox 50 further comprises a gearbox input shaft 90 having gear teeth on its surface. One end of the gearbox input shaft 90 is coaxially connected with the electric motor output shaft 42, and the other end thereof, as a sun gear, meshes with the third planetary gear 58. Advantageously, the gearbox input shaft 90, the third sun gear 59, the second sun gear 56, and the gearbox output shaft 51 are coaxially arranged.

When the electric motor 40 is started, the electric motor output shaft 42 drives the gearbox input shaft 90, whose torque is transmitted sequentially to the third planetary gear 58, the third planetary carrier 57, the third sun gear 59, the second planetary gear 55, the second planetary carrier 54, the second sun gear 56, the first planetary gear 53, and the first planetary carrier 52, and is finally output by the gearbox output shaft 51. Through the above-mentioned transmission, the rotational power output by the electric motor is decreased in speed but increased in torque.

In addition to the structures described above, the driver device may also comprise other functional components as needed. For example, a seal ring 81 may be arranged on the gearbox input shaft 90, a seal ring 83 may be arranged between the flange 70 and the gearbox housing 60, and further, an oil seal 82 may be arranged at the right end of the gearbox housing 60 to seal the internal structure of the gearbox. Furthermore, other seals, bearings, circlips, etc. may be arranged in the gearbox housing 60 at appropriate positions as needed.

With a planetary gear gearbox 50 to achieve torque transmission, the driver device 20 shown in FIGS. 3 and 4 can effectively reduce the radial size of the driver device while providing a large torque, so that the driver device can be configured to match the door shaft 30 of the vehicle door, to be directly mounted thereon, and to provide a torque at the end of the door shaft 30. Compared with the vehicle door opening and closing functions in the prior art, the driver device of the present invention can be installed by utilizing the space at the vehicle door shaft, without affecting the integrity of the door body of the vehicle door.

Although three planetary gear sets are provided and each gear set comprises three planetary gears in the embodiments shown in the figures, more or fewer planetary gear sets and planetary gears on each planetary gear set may be provided, which mainly depends on the installation space of the driver device, the deceleration requirements, and etc.. For example, in order to provide a larger reduction ratio, more planetary gear sets can be used if the axial installation space of the driver device permits. On the other hand, fewer planetary gear sets can be used if the reduction ratio is sufficient. For example, only one planetary gear set is provided to reduce the axial length of the driver device, so that the gearbox input shaft 90 meshes directly with the first planetary gear 53. Alternatively, only the third and first planetary gear sets shown in the figures are provided.

The above description is merely some exemplary embodiments relating to the spirit and principle of the present invention. Those skilled in the art will understand that various changes can be made to the examples described above without departing from the spirit and principle of the present invention, and these changes and various equivalents thereof can be envisaged by the inventor and all fall within the scope defined by the claims of the present invention.

## Claims

1. A driver device (20) for opening and closing a vehicle door (10), comprising:
an electric motor (40) comprising an electric motor output shaft (42);
a planetary gear gearbox (50) comprising:
a gearbox input shaft (90) coaxially connected to the electric motor output shaft (42);
a gearbox output shaft (51) coaxially connected to an end of a door shaft (30) of the vehicle door (10) to provide the door shaft (30) with a torque required to open and close the vehicle door (10).

2. The driver device according to claim 1, **characterized in that** the gearbox input shaft (90) is provided as a first sun gear.

3. The driver device according to claim 2, **characterized in that** the planetary gear gearbox (50) further comprises a non-rotatably mounted gearbox housing (60), whose inner surface is provided with a toothing (61).

4. The driver device according to claim 3, **characterized in that** the planetary gear gearbox (50) further comprises a first planetary carrier (52), on which a first planetary gear (53) meshing with the toothing (61) is arranged, and a rotary shaft of the first planetary carrier (52) is formed as the gearbox output shaft (51).

5. The driver device according to claim 4, **characterized in that** the planetary gear gearbox (50) further comprises a second planetary carrier (54), on which a second planetary gear (55) meshing with the toothing (61) is arranged, and a rotary shaft of the second planetary carrier (54) serves as a second sun gear (56) meshing with the first planetary gear (53).

6. The driver device according to claim 5, **characterized in that** the planetary gear gearbox (50) further comprises a third planetary carrier (57), on which a third planetary gear (58) is arranged, the third planetary gear (58) meshes with the toothing (61) and the gearbox input shaft (90), and a rotary shaft of the third planetary carrier (57) serves as a third sun gear (59) meshing with the second planetary gear (55).

7. The driver device according to claim 6, **characterized in that** the gearbox input shaft (90), the third sun gear (59), the second sun gear (56) and the gearbox output shaft (51) are coaxially arranged.

8. The driver device according to claim 3, **characterized in that** the planetary gear gearbox (50) further comprises a flange (70) fixedly connected with the electric motor (40) in an axial direction and fixedly connected with the gearbox housing (60) in a radial direction.

9. The driver device according to claim 1, wherein the gearbox output shaft (51) comprises a flat free end that extends into a recess provided with a matching configuration in an end of the door shaft (30) of the vehicle door.

10. A vehicle door (10), comprising a door body (11), a door shaft (30) for pivotally mounting the door body (11) to a vehicle body (70) and a driver device (20) mounted to the door shaft (30), the driver device (20) comprising:
an electric motor (40) comprising an electric motor output shaft (42); and
a planetary gear gearbox (50) comprising:
a gearbox input shaft (90) coaxially connected to the electric motor output shaft (42); and
a gearbox output shaft (51) coaxially connected to an end of the door shaft (30) to provide the door shaft (30) with a torque required to open and close the vehicle door (10).
